# EUROPÄISCHE PATENTSCHRIFT

(11) **EP 1 225 313 B1**
(45) Veröffentlichungstag und Bekanntmachung des Hinweises auf die Patenterteilung: **09.06.2010**
(21) Anmeldenummer: 01128809.9
(22) Anmeldetag: 04.12.2001
(51) Int. Cl.: F01N 3/28, F01N 13/14, F01N 13/18

(54) **Abgasbehandlungseinrichtung**
Exhaust gas processing device
Dispositif de traitement des gaz d'échappement

(30) Priorität: 20.01.2001 DE 10102638
(43) Veröffentlichungstag der Anmeldung: 24.07.2002
(73) Patentinhaber: Bayerische Motoren Werke Aktiengesellschaft, 80809 München (DE)
(72) Erfinder: Dietsche, Andreas, Dr., 80807 München (DE)

(56) Entgegenhaltungen:
- WO-A-00/43105
- DE-U1- 20 006 032
- GB-A- 2 267 234
- JP-A- 59 079 025

## Beschreibung

Die Erfindung betrifft eine Abgasbehandlungseinrichtung zur katalytischen Reinigung oder Veränderung von heißen Abgasen, insbesondere den Abgasen eines Verbrennungsmotores eines Kraftfahrzeuges.

Aus dem deutschen Gebrauchsmuster DE 200 06 032 U1, von der diese Erfindung ausgeht, ist eine Abgasbehandlungseinrichtung mit einem Gehäuseelement und einem darin in einem Katalysatormantel aufgenommenen Katalysatorkörper bekannt, wobei in einem zwischen dem Gehäuselement und dem Katalysatorkörper begrenzten Zwischenraum ein Ringmantelelement vorgesehen ist, das mit dem Katalysatormantel im Bereich eines über den Katalysatorkörper axial überstehenden Umfangsabschnittes gekoppelt ist und in einem von dieser der Kopplungsstelle beabstandeten Bereich sowohl zwischen dem Katalysatormantel als auch zwischen dem Gehäuseelement jeweils einen Ringspalt bildet.

Im Hinblick auf eine rasche Erwärmung des Katalysators auf die zur Erreichung des gewünschten Abgasreinigungseffektes erforderliche Betriebstemperatur, ist man bestrebt, den Katalysator nahe an den Auslassbereich eines Verbrennungsmotors heranzuführen. Die auf den Katalysator wirkenden thermischen und mechanischen Belastungen nehmen mit dessen Annäherung an den Auslassbereich der Brennkraftmaschine zu.

Der Erfindung liegt die Aufgabe zugrunde, eine Abgasbehandlungseinrichtung der eingangs genannten Art zu schaffen, die sich unter fertigungstechnischen Gesichtspunkten in vorteilhafter Weise herstellen lässt und durch welche die Funktionsfähigkeit des Katalysators über einen langen Zeitraum gewährleistet ist.

Diese Aufgabe wird erfindungsgemäß dadurch gelöst, dass die gattungsgemäße Abgasbehandlungseinrichtung zur Kopplung des Ringmantelelementes mit dem Gehäuseelement ein Zwischenstück vorgesehen ist.

Das Ringmantelelement ist vorzugsweise im Bereich seine stromabwärts liegenden Endbereiches mit dem Gehäuseelement gekoppelt. Zur Koppelung des Ringmantelelementes mit dem Gehäuseelement ist vorzugsweise ein Zwischenstück vorgesehen, das mit dem Ringmantelelement über eine Umfangsschweißnaht gekoppelt ist. Hierdurch wird es auf vorteilhafte Weise möglich das Ringmantelelement und das Zwischenstück aus Metallzuschnitten unterschiedlicher Wanddicke zu fertigen.

Dadurch wird es auf vorteilhafte Weise möglich, den Katalysatorkörper auf zuverlässige Weise in dem Gehäuseelement zu fixieren, wobei hinsichtlich der Einleitung der Kräfte in den Katalysatorkörper eine verbesserte Flächenpressungsund Kräfteverteilung erreicht wird. In besonders vorteilhafter Weise wird erreicht, daß selbst vergleichsweise große Formänderungen des Katalysatorkörpers keine unzulässig hohen Belastungen des Katalysatorkörpers verursachen.

Gemäß einer besonders bevorzugten Ausführungsform der Erfindung ist das Ringmantelelement mit dem Katalysatormantel entlang eines über eine Gaszutrittsseite des Katalysatorkörpers axial überstehenden Umfangsabschnittes des Katalysatormantels gekoppelt. Hierdurch wird eine in radialer Richtung federnd nachgiebige Aufhängung des Katalysatorkörpers erreicht.

Die Koppelung zwischen dem Ringmantelelement und dem Katalysatormantel erfolgt vorzugsweise über eine Umfangsschweißnaht. Diese Umfangsschweißnaht ist vorzugsweise als Kehlnaht ausgebildet, wobei die zur Aufnahme des Nahtmateriales vorgesehene Auskehlung vorzugsweise dadurch erreicht wird, daß die beiden stirnseitigen Enden des Ringmantelelementes und des Katalysatormantels zueinander axial versetzt sind.

Eine im Hinblick auf eine besonders gleichmäßige Flächenpressungsverteilung vorteilhafte Ausführungsform der Erfindung ist dadurch gegeben, daß der Innendurchmesser des Ringmantelelements im Bereich der Koppelungsstelle auf den Außendurchmesser des Katalysatormantels reduziert ist.

Der hinsichtlich seines Innendurchmessers reduzierte Bereich des Ringmantelelementes weist vorzugsweise eine axiale Tiefe auf, die größer ist als der Überstand des Katalysatormantels über die gaseintrittsseitige Stirnseite des Katalysatorkörpers. Hierdurch wird erreicht, daß ein vergleichsweise schmaler Randbereich des Katalysatormantels zusätzlich durch das Ringmantelelement verstärkt ist. Der Katalysatormantel selbst kann bei dieser Ausführungsform vergleichsweise dünnwandig ausgebildet sein, wodurch eine noch raschere Erwärmung des Katalysatorkörpers erreicht wird.

Das Ringmantelelement ist in vorteilhafter Weise hinsichtlich seiner axialen Länge derart bemessen, daß sich dieses wenigstens bis in den Bereich einer gasaustrittsseitigen Stirnseite des Katalysatorkörpers vorzugsweise jedoch über die gasaustrittseitige Stirnseite des Katalysatorkörpers hinaus erstreckt. Dadurch wird eine besonders biegeweiche Lagerung des Katalysatorkörpers erreicht.

Vorzugsweise bildet der erfindungsgemäß gelagerte Katalysatorkörper einen Vorkatalysator welcher stromaufwärts eines Hauptkatalysators angeordnet ist. Die Matrix des Katalysatorkörpers kann aus einem Metall- oder Keramikwerkstoff gebildet sein. Die Fixierung des Katalysatorkörpers in dem Katalysatormantel kann durch Klemmung und/oder Formschluß sowie insbesondere durch hitzebeständige Schweiß- oder Lötstellen erreicht sein. Es ist möglich, den Katalysatormantel oder zumindest eine Haftbrücke im Rahmen eines elektrolytischen Abscheidevorganges auszubilden.

Das vorangehend genannte Zwischenstück ist vorzugsweise mit dem Gehäuseelement über eine Umfangsschweißnaht gekoppelt, wobei diese Umfangsschweißnaht vorzugsweise derart angeordnet ist, daß diese das Gehäuseelement, das Zwischenstück und ein Hauptkatalysatorgehäuseelement miteinander koppelt. Das Zwischenstück kann hierbei als Zentrierhilfe dienen, durch welche auf zuverlässige Weise die Position des Gehäuseelementes und des Hauptkatalysatorgehäuseelementes zueinander festgelegt sind. In vorteilhafter Weise wird hierdurch auch eine Abschirmung der Schweißstelle von dem Hauptkatalysator erreicht so daß etwaige nachteilige Auswirkungen des Schweißvorganges auf die beiden Katalysatorkörper vermieden sind. Das Zwischenstück ist vorzugsweise trichterartig ausgebildet und erweitert sich vorzugsweise auf den Querschnitt des Hauptkatalysators bzw. auf den Querschnitt eines den Hauptkatalysator aufnehmenden Gehäuseelementes.

Weitere vorteilhafte Einzelheiten der Erfindung ergeben sich aus der nachfolgenden Beschreibung in Verbindung mit der Zeichnung. Die einzige Figur zeigt:
Einen Axialschnitt einer hier als Vorkatalysator ausgebildeten Abgasbehandlungseinrichtung mit einem Katalysatorkörper, dessen Katalysatormantel über ein einseitig fixiertes Ringmantelelement in einem zur Gasaustrittseite offenen ersten Ringraum und einem zur Gaseintrittsseite offenen zweiten Ringraum aufgehängt ist.

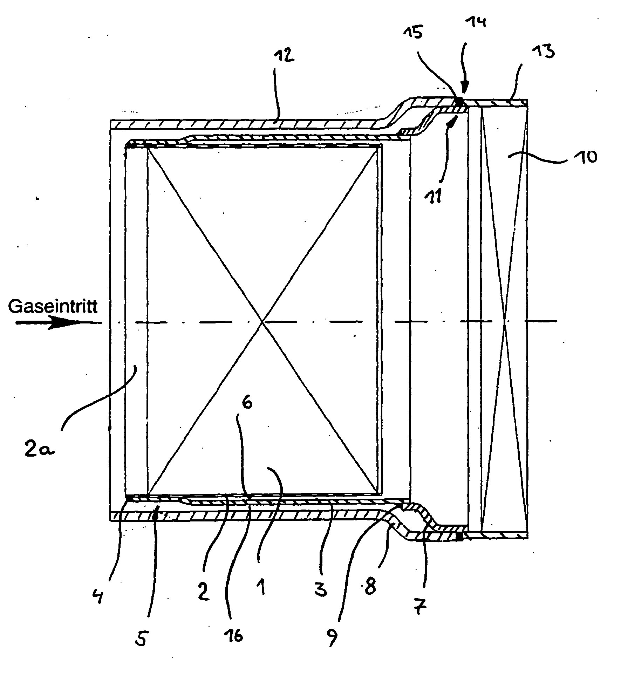

Die in Figur 1 dargestellte Abgasbehandlungseinrichtung ist hier als Vorkatalysator ausgebildet. Der Vorkatalysator umfaßt einen Katalysatorkörper 1 der hier durch eine Metallmatrix gebildet ist. Der Katalysatorkörper 1 ist mit einem Katalysatormantel 2 versehen der hier aus einem dünnwandigen Rohrabschnitt gefertigt und mit dem Katalysatorkörper 1 verbunden ist. Die Wanddicke des Katalysatormantels 2 liegt bei dem dargestellten Ausführungsbeispiel im Bereich von 0,3 bis 0,6 mm, vorzugsweise bei 0,5mm.

Der Katalysatormantel 2 weist bei dem gezeigten Ausführungsbeispiel eine axiale Länge auf, die größer ist als die axiale Länge des Katalysatorkörpers 1. Der Katalysatorkörper 1 ist in dem Katalysatormantel 2 derart angeordnet, daß der Katalysatormantel 2 über wenigstens eine Stirnseite des Katalysatorkörpers 1 in axialer Richtung übersteht. Der hier auf der Seite des Gaseintritts vorgesehene Überstand 2a ist derart dimensioniert, daß dieser wenigstens 6% der axialen Länge des Katalysatorkörpers 1 beträgt.

Der Katalysatorkörper 1 ist im Bereich des Überstandes 2a mit einem Ringmantelelement 3 gekoppelt. Die Koppelung wird hier durch eine Schweißnaht 4 sowie durch eine Fügezone 5 erreicht. Im Bereich der Fügezone 5 ist das Ringmantelelement 3 unter einem leichten Klemmsitz auf den Katalysatormantel 2 aufgesetzt, so daß bereits vor Ausbildung der Schweißnaht 4 eine ausreichende Vorpositionierung gewährleistet ist. Das Ringmantelelement 3 ist hierzu mit einem eingezogenen Bereich versehen, so daß der Innenquerschnitt des Ringmantelelementes 3 im wesentlichen dem Außenquerschnitt des Katalysatormantels 2 entspricht.

In einem, in Gasströmungsrichtung der Fügezone 5 abfolgenden Bereich ist zwischen dem Katalysatormantel 2 und dem Ringmantelelement 3 ein erster Ringspalt 6 ausgebildet welcher einen zur Gasaustrittsseite hin offenen Mündungsbereich aufweist. Dieser Ringspalt 6 ist derart dimensioniert, daß das der Schweißstelle 4 abgewandte Ende des Katalysatormantels 2 unter betriebsüblichen Belastungen oder möglichen Verformungen nicht gegen die Innenwandung des Ringmantelelementes 3 stoßen kann. Die axiale Länge des Ringspaltes 6 beträgt vorzugsweise wenigstens 70% der axialen Länge des Katalysatorkörpers.

Das Ringmantelelement 3 ist über ein Zwischenstück 7 mit einem Gehäuseelement 8 verbunden. Hierzu ist das Zwischenstück 7 auf das Ringmantelelement 3 aufgesetzt. Im Bereich der zwischen diesen beiden Teilen gebildeten Fügestelle ist auf einer dem Katalysatorkörper 1 abgewandten Außenseite, eine Schweißnaht 9 vorgesehen welche die beiden Bauteile miteinander verbindet. Das Ringmantelelement 3 weist eine geringere Wanddicke auf als das Zwischenstück 7.

Das Zwischenstück 7 ist trichterartig ausgebildet und erweitert sich von dem Querschnitt des Ringmantelelementes 3 auf den Querschnitt eines Hauptkatalysatorkörpers 10. Das Zwischenstück 7 bildet eine Umfangszone 11 welche eng passend in einem Gehäuseelement 12 und in einem Hauptkatalysatorgehäuseelement 13 sitzt. Durch diese Umfangszone 11 werden die beiden Gehäuseelemente 12, 13 zueinander positioniert. Im Bereich einer im Zusammenspiel des Zwischenstückes 7 mit dem Gehäuseelement 12 sowie mit Hauptkatalysatorgehäuseelement 13 gebildeten, nach innen abgeschirmten Fügestelle 14 sind diese drei Bauteile über eine Umfangsschweißnaht 15 miteinander abgedichtet verbunden.

Zwischen dem Ringmantelelement 3 und dem Gehäuseelement 12 ist ein zweiter Ringspalt 16 gebildet welcher zur Gaseintrittsseite hin offen ist. Dieser abgasumspülte Ringspalt 16 ist derart dimensioniert, daß das Ringmantelelement 3 unter betriebsüblichen Belastungen oder Verformungen nicht an dem Gehäuseelement 12 anstößt.

Die Wanddicken des Zwischenstückes 7, des Ringmantelelementes 3 und des Katalysatormantels 2 sind vorzugsweise in der angegebenen Reihenfolge abnehmend abgestuft. Die beschriebenen Gehäuseteile, sowie das Zwischenstück 7, das Ringmantelelement 3 und der Katalysatormantel 2 sind vorzugsweise aus einem korrosions- und wärmebeständigen Stahlwerkstoff gefertigt. Durch die Schweißstellen 4 und 9 wird vorzugsweise ein gasdichter Abschluß des jeweiligen Ringspaltes 6 bzw. 16 erreicht.

Die Erfindung ist nicht auf das vorangehend beschriebene Ausführungsbeispiel beschränkt. Insbesondere ist es möglich, das Ringmantelelement 3 und das Zwischenstück 7 einteilig auszubilden. Weiterhin ist es möglich, dem Vorkatalysator einen unrunden insbesondere polygonalen Querschnitt zu verleihen. Weiterhin ist es möglich, dem Ringmantelelement über dessen Außengeometrie insbesondere durch Umfangssicken eine höhere Nachgiebigkeit zu verleihen.

## Patentansprüche

1. Abgasbehandlungseinrichtung mit einem Gehäuseelement (12) und einem darin in einem Katalysatormantel (2) aufgenommenen Katalysatorkörper (1), wobei in einem zwischen dem Gehäuseelement (12) und dem Katalysatorkörper (1) begrenzten Zwischenraum ein Ringmantelelement (3) vorgesehen ist, das mit dem Katalysatormantel (2) im Bereich eines über den Katalysatorkörper (1) axial überstehenden Umfangsabschnittes gekoppelt ist und in einem von dieser der Kopplungsstelle (4, 5) beabstandeten Bereich sowohl zwischen dem Katalysatormantel (2) als auch zwischen dem Gehäuseelement (12) jeweils ein Ringspalt (6, 16) bildet,
**dadurch gekennzeichnet, dass** zur Kopplung des Ringmantelelementes (3) mit dem Gehäuseelement (12) ein Zwischenstück (7) vorgesehen ist.

2. Abgasbehandlungseinrichtung nach Anspruch 1,
**dadurch gekennzeichnet, dass** sich die Kopplungsstelle (4, 5) zwischen dem Ringmantelelement (3) und dem Katalysatormantel (2) auf einer Gaszutrittsseite des Katalysatorkörpers befindet.

3. Abgasbehandlungseinrichtung nach Anspruch 1 oder 2,
**dadurch gekennzeichnet, dass** der Innenquerschnitt des Ringmantelelements (3) im Bereich der Kopplungsstelle auf den Außenquerschnitt des Katalysatormantels (2) reduziert ist.

4. Abgasbehandlungseinrichtung nach wenigstens einem der Ansprüche 1 bis 3,
**dadurch gekennzeichnet, dass** der hinsichtlich seines Innenquerschnittes reduzierte Bereich des Ringmantelelementes (3) eine axiale Länge aufweist, die größer ist als der Überstand des Katalysatormantels (2) über die gaseintrittsseitige Stirnseite des Katalysatorkörpers (1).

5. Abgasbehandlungseinrichtung nach wenigstens einem der Ansprüche 1 bis 4,
**dadurch gekennzeichnet, dass** das Ringmantelelement (3) hinsichtlich seiner axialen Länge derart bemessen ist, dass sich dieses wenigstens bis in den Bereich einer gasaustritssseitigen Stirnseite des Katalysatorkörpers (1) erstreckt.

6. Abgasbehandlungseinrichtung nach wenigstens einem der Ansprüche 1 bis 5,
**dadurch gekennzeichnet, dass** das Ringmantelelement (3) im Bereich seines stromabwärts liegenden Endbereiches mit dem Gehäuseelement (12) gekoppelt ist.

7. Abgasbehandlungseinrichtung nach wenigstens einem der Ansprüche 1 bis 6,
**dadurch gekennzeichnet, dass** das Zwischenstück (7) mit dem Ringmantelelement (3) über eine Umfangsschweißnaht (9) gekoppelt ist.

8. Abgasbehandlungseinrichtung nach wenigstens einem der Ansprüche 1 bis 7,
**dadurch gekennzeichnet, dass** das Zwischenstück (7) mit dem Gehäuselement (12) über eine Umfangsschweißnaht (15) gekoppelt ist, wobei diese Umfangsschweißnaht (15) das Gehäuseelement (12), das Zwischenstück (7) und ein Hauptkatalysatorgehäuseelement (13) miteinander koppelt.

9. Abgasbehandlungseinrichtung nach wenigstens einem der Ansprüche 1 bis 8,
**dadurch gekennzeichnet, dass** das Zwischenstück (7) trichterartig ausgebildet ist.

10. Abgasbehandlungseinrichtung nach wenigstens einem der Ansprüche 1 bis 9,
**dadurch gekennzeichnet, dass** der Katalysatorkörper (1) einen Vorkatalysator bildet und dass in Gasströmungsrichtung abfolgend ein Hauptkatalysator (10) angeordnet ist.

11. Abgasbehandlungseinrichtung nach wenigstens einem der Ansprüche 1 bis 10,
**dadurch gekennzeichnet, dass** das Zwischenstück (7) sich auf den Eintrittsquerschnitt des Hauptkatalysators (10) erweitert.

## Claims

1. An exhaust gas treatment device comprising a casing element (12) and a catalyst member (1) in a catalyst jacket (2), wherein an annular jacket element (3) in a space between the casing element (12) and the catalyst member (1) is coupled to the catalyst jacket (2) in a peripheral region projecting axially over the catalyst member (1) and forms an annular gap (6,16) between the catalyst member (2) and the casing element (12) in a region remote from the peripheral portion of the coupling place (4, 5),
**characterised in that** an intermediate member (7) is provided for coupling the annular jacket element (3) to the casing element (12).

2. An exhaust gas treatment device according to claim 1,
**characterised in that** the coupling place (4, 5) between the annular jacket element (3) and the catalyst jacket (2) is on a gas inlet side of the catalyst member.

3. An exhaust gas treatment device according to claim 1 or 2,
**characterised in that** at the coupling place, the inner cross-section of the annular jacket element (3) is reduced to the outer cross-section of the catalyst jacket (2).

4. An exhaust gas treatment device according to at least one of claims 1 to 3,
**characterised in that** the reduced inner cross-section region of the annular jacket element (3) has an axial length greater than the amount by which the catalyst jacket (2) projects over the end face of the catalyst member on the gas inlet side.

5. An exhaust gas treatment device according to at least one of claims 1 to 4,
**characterised in that** the axial length of the annular jacket element (3) is such that it extends at least into the region of an end face of the catalyst member (1) on the gas outlet side.

6. An exhaust gas treatment device according to at least one of claims 1 to 5,
**characterised in that** the downstream end region of the annular jacket element (3) is coupled to the casing element (12).

7. An exhaust gas treatment device according to at least one of claims 1 to 6,
**characterised in that** the intermediate member (7) is coupled to the annular jacket (3) by a peripheral weld (9).

8. An exhaust gas treatment device according to at least one of claims 1 to 7,
**characterised in that** the intermediate member (7) is coupled to the casing element (12) via a peripheral weld (15), wherein the peripheral weld (15) couples the casing element (12), the intermediate member (7) and a main catalyst casing element (13).

9. An exhaust gas treatment device according to at least one of claims 1 to 8,
**characterised in that** the intermediate member (7) is funnel-shaped.

10. An exhaust gas treatment device according to at least one of claims 1 to 9,
**characterised in that** the catalyst member (1) forms a pre-catalytic converter and a main catalytic converter (10) is disposed downstream in the direction of gas flow.

11. An exhaust gas treatment device according to at least one of claims 1 to 10,
**characterised in that** the intermediate member (7) widens to the inlet cross-section of the main catalytic converter (10).

## Revendications

1. Installation de traitement des gaz d'échappement comportant un élément (12) formant un boîtier logeant un corps de catalyseur (1) placé dans une enveloppe de catalyseur (2),
un élément en forme d'enveloppe annulaire (3) étant placé entre l'élément (12) formant le boîtier et le corps de catalyseur (1), cet élément étant couplé à l'enveloppe (2) du catalyseur dans la zone d'un segment périphérique dépassant axialement du corps de catalyseur (1) et un intervalle annulaire (6, 16) formé d'une part avec l'enveloppe de catalyseur (2) et d'autre part avec l'élément (12) formant le boîtier, dans une zone écartée du point de couplage (4, 5),
**caractérisée par**
une pièce intermédiaire (7) réalisant le couplage de l'élément d'enveloppe annulaire (3) avec l'élément (12) formant le boîtier.

2. Installation de traitement des gaz d'échappement selon la revendication 1,
**caractérisée en ce que**
le point de couplage (4, 5) entre l'élément d'enveloppe annulaire (3) et l'enveloppe de catalyseur (2) se trouve sur le côté de sortie des gaz du corps de catalyseur.

3. Installation de traitement des gaz d'échappement selon la revendication 1 ou 2,
**caractérisée en ce que**
la section intérieure de l'élément d'enveloppe annulaire (3) dans la zone du point de couplage, est réduite à la section extérieure de l'enveloppe de catalyseur (2).

4. Installation de traitement des gaz d'échappement selon les revendications 1 à 3,
**caractérisée en ce que**
la zone de section intérieure réduite de l'élément d'enveloppe annulaire (3) a une longueur axiale supérieure à la longueur selon laquelle l'enveloppe de catalyseur (2) dépasse de la face frontale d'entrée des gaz du corps de catalyseur (1).

5. Installation de traitement des gaz d'échappement selon les revendications 1 à 4,
**caractérisée en ce que**
l'élément formant l'enveloppe annulaire (3) a une longueur axiale arrivant au moins jusque dans la zone de la face frontale de sortie des gaz d'échappement du corps de catalyseur (1).

6. Installation de traitement des gaz d'échappement selon les revendications 1 à 5,
**caractérisée en ce que**
l'élément d'enveloppe annulaire (3) est couplé à l'élément (12) formant le boîtier dans la zone de sa partie d'extrémité située en aval.

7. Installation de traitement des gaz d'échappement selon les revendications 1 à 6,
**caractérisée en ce que**
la pièce intermédiaire (7) est couplée à l'élément d'enveloppe annulaire (3) par un cordon de soudure périphérique (9).

8. Installation de traitement des gaz d'échappement selon les revendications 1 à 7,
**caractérisée en ce que**
la pièce intermédiaire (7) est couplée à l'élément (12) formant le boîtier par un cordon de soudure périphérique (15),
ce cordon de soudure périphérique (15) couplant l'élément (12) formant le boîtier, la pièce intermédiaire (7) et un élément de boîtier de catalyseur principal (13).

9. Installation de traitement des gaz d'échappement selon les revendications 1 à 8,
**caractérisée en ce que**
la pièce intermédiaire (7) est en forme d'entonnoir.

10. Installation de traitement des gaz d'échappement selon les revendications 1 à 9,
**caractérisée en ce que**
le corps de catalyseur (1) forme un catalyseur amont et un catalyseur principal (10) est prévu en aval dans le sens du passage des gaz d'échappement.

11. Installation de traitement des gaz d'échappement selon les revendications 1 à 10,
**caractérisée en ce que**
la pièce intermédiaire (7) s'élargit jusqu'à la section d'entrée du catalyseur principal (10).
